Europäisches Patentamt

European Patent Office

Office européen des brevets

(11) Publication number: **0 362 429**
**A1**

## EUROPEAN PATENT APPLICATION

(21) Application number: 88116536.9

(22) Date of filing: 06.10.88

(51) Int. Cl.$^5$: **C02F 1/72 , B01J 23/00**

(43) Date of publication of application:
**11.04.90 Bulletin 90/15**

(84) Designated Contracting States:
**BE CH DE FR GB IT LI NL**

(71) Applicant: **FMC Corporation**
**2000 Market Street**
**Philadelphia Pennsylvania 19103(US)**

(72) Inventor: **Bull, Randy Alan**
**138 Taylor Terrace**
**Hopewell New Jersey 08525(US)**

(74) Representative: **Klausner, Erich et al**
**c/o Ufficio Internazionale Brevetti Ing. C.**
**Gregorj S.p.A. Via Dogana 1**
**I-20123 Milano(IT)**

(54) Process for oxidizing a low-valent sulfur compound.

(57) A process is provided for oxidizing a low-valent sulfur compound contained in an aqueous solution to elemental sulfur or to sulfate by incorporating hydrogen peroxide and a solid catalyst comprising a transition metal supported on an aluminium oxide and/or silicon oxide base.

EP 0 362 429 A1

# PROCESS FOR OXIDIZING A LOW-VALENT SULFUR COMPOUND

A process is provided for oxidizing a low-valent sulfur compound in an aqueous medium by incorporating hydrogen peroxide and a solid catalyst into the aqueous medium.

In particular, the present invention is a process for oxidizing sulfides, polysulfides, dithionates, polythionates, thiosulfates and other low-valent sulfur compounds to form sulfur compounds such as sulfate and elemental sulfur which either are easily removed or are environmentally acceptable. The process does not require removing the low-valent sulfur compound from the solution.

Thiosulfate ions which are often formed during the oxidation of low-valent sulfur compounds are particularly difficult to oxidize further. Sulfides at a low pH form $H_2S$ gas which is very toxic and offensive and must be oxidized immediately.

Aqueous wastes containing a low-valent sulfur compound cannot be discharged into the environment without preliminary treatment because of the high chemical oxygen demand and the high biological oxygen demand of the aqueous medium. Further, many low-valent sulfur compounds are either toxic or form insoluble compounds capable of fouling surfaces.

The chemistry of the oxidation of low-valent sulfur compounds is complicated because the compounds often are oxidized step-wise to form intermediate compounds, some of which are capable of disproportionating.

Hydrogen peroxide would be an ideal oxidizing agent for oxidizing low-valent sulfur compounds because it does not leave toxic residues if used in excess. However, prior processes employing hydrogen peroxide are not generally suitable because they require either a homogeneous and frequently toxic catalyst or severe chemical conditions. For example, it may be necessary to employ a pH > 8, necessitating subsequent treatment of the aqueous medium prior to discharge into the environment. Kibble, "Peroxide Treatment for Industrial Waste Problems," Industrial Water Engineering, page 6, August/September, 1976, discloses that solutions containing ions of molybdenum, tungsten, titanium, vanadium, zirconium, thorium, tantalum, or columbium will catalyze thiosulfate oxidation in neutral or weakly acid solutions. However, the rates of catalyzed oxidation in acid solution are on the order of uncatalyzed reactions under alkaline conditions.

U. S. Patent No. 4,569,769 teaches that soluble copper ions catalyze the removal of thiosulfate from waste water with hydrogen peroxide. This process is effective for thiosulfate removal but, in addition to the soluble copper catalyst, sufficient alkali must be added to raise the pH to at least 8. A further disadvantage is that copper ions must be added continuously if waste streams are treated. This results in high consumption of the copper catalyst and the release of potentially toxic copper into the environment.

U. S. Patent No. 4,443,342 teaches a process to oxidize organic sulfur compounds with hydrogen peroxide at a pH of less than 6.5 by adding a soluble copper salt as a catalyst.

U. S. Patent No. 4,367,212 teaches a process employing hydrogen peroxide in the absence of a catalyst for oxidizing thiosulfate in an aqueous solution at a pH of more than 8.

Yokosuka et al., "Chemical Behaviour of Low-Valent Sulfur Compounds XII: Oxidation of Sodium Thiosulfate with Hydrogen Peroxide and Sodium Hypochlorite," Journal of the Japan Chemistry Society, (11), pages 1901-1909, 1975 discloses that the reactions of hydrogen peroxide and low-valent sulfur compounds such as thiosulfate, sulfites, trithionate and tetrathionate are strongly pH dependent. However, in the presence of dissolved iron the compounds were completely oxidized.

Schumb et al., Hydrogen Peroxide, Reinhold Publishing Corporation, N.Y. (1955) discloses that sulfide is readily oxidized by hydrogen peroxide in alkaline media. The reaction can be catalyzed by iron present in an aqueous solution. Other references disclose sulfide oxidation in the presence of dissolved transition metal ions and/or pH control. U. S. Patent No. 4,292,293, teaches a soluble metal ion complexed with a water soluble polymer. This complex catalyzes the oxidation of inorganic sulfide in water with hydrogen peroxide. U. S. Patent No. 4,572,076 teaches contacting hydrogen peroxide and a caustic with geothermal steam to remove hydrogen sulfide. U. S. Patent No. 4,361,487 teaches a soluble sodium vanadate catalyst and hydrogen peroxide to oxidize hydrogen sulfite in steam condensate.

All of these prior teachings have in common either the requirement of a very high pH or of a soluble catalyst to oxidize low-valent sulfur compounds.

The present invention is a process for oxidizing a low-valent sulfur compound in an aqueous medium comprising incorporating hydrogen peroxide into the aqueous medium and contacting the medium with a solid catalyst, the catalyst comprising a transition metal selected from the group consisting of vanadium, chromium, molybdenum, tungsten, cobalt, copper, nickel, manganese and iron supported on a metal oxide base, said metal oxide base having a surface area of at least 10 square meters per gram, said metal oxide being selected from the group consisting of aluminum oxide and silicon oxide and mixtures thereof.

For the purpose of this invention a "low-valent sulfur compound" is an inorganic or organic chemical compound of sulfur and at least one other element in which sulfur has a valence of less than +6. The low-valent sulfur compound may be soluble in the aqueous medium or may comprise a separate phase such as a gas, a liquid or a solid which will, in part, dissolve in or hydrolyze with the aqueous medium.

The catalyst must have a substantial surface area of at least 1Ø square meters per gram to provide sufficient transition metal centers available to the aqueous medium containing hydrogen peroxide. This surface area can be provided by amorphous or crystalline metal oxides such as, aluminum oxide, silicon oxide and aluminosilicates. An amorphous silica gel with no intentionally added alumina as well as a crystalline zeolite can be effective as a base for the transition metal. Preferably the base may be a molecular sieve material which term as used herein includes silica polymorphs known as silicalite, F-silicalite and TEA-silicalite as well as conventional zeolites such as, zeolite X, zeolite Y, mordenite, the ZSM family of zeolites and the like.

Any transition metal which is known to be effective in catalyzing the reaction may be employed desirably a transition metal will be selected of Group VIB or with an atomic number of from 23 to 29 preferably copper, nickel, manganese and iron. The most preferred transition metal is copper.

It is particularly unexpected that a transition metal supported on a metal oxide base would be effective in catalyzing the oxidation of a low-valent sulfur compound by hydrogen peroxide in view of Mochida et al., "Transition Metal Ions on Molecular Sieves. II. Catalytic Activities of Transition Metal Ions on Molecular Sieves for the Decomposition of Hydrogen Peroxide," The Journal of Physical Chemistry, vol. 78, No. 16, 1974, pages 1653-1657. This reference discloses that the catalytic activity of transition metal ions for decomposing hydrogen peroxide was enhanced on exchanging the ions onto a zeolite Y molecular sieve. This reference also discloses that it is impossible to predict the effect of a hydrogen peroxide decomposition catalyst of a transition metal supported on a zeolite from the catalytic effect of the transition metal ions in solution. Unexpectedly, there appears to be no correlation disclosed by the reference between the activity of the transition metals on a metal oxide base as decomposition catalysts compared with the activity discovered here for those metals as oxidation catalysts for low-valent sulfur compounds.

Any method of introducing metal catalysts onto the solid supports will result in a suitable catalyst. Preferable methods are those involving ion exchange or adsorption of the metal ions from a solution. However, other methods such as incorporation of the metal into the support by crystallization or during preparation of zeolites might also be suitable. Metals may also be introduced as a result of metal ions present in a waste or process stream.

Process parameters for operating the present invention may be varied over a wide range. A pH of at least 3 is desirable, preferably between pH 3 and pH 1Ø. The catalysts show activity at ambient temperatures and require no additional heat. However, in some cases higher temperatures will be desirable to shorten the required treatment time. The upper practical temperature limit will be the boiling point of the aqueous waste stream and the lower practical limit the freezing point. Preferable temperature ranges are 1Ø°C to 8Ø°C to prevent long reaction times and to prevent excessive hydrogen peroxide decomposition, respectively. It would be ideal to operate this process between 15°C and 7Ø°C.

The amount of catalyst required for treatment will depend upon the pollutant, the flow rate of the waste stream (or time required for pollutant removal), the reaction temperature to be used and the concentration of metal on the solid support. Specific reaction parameters may be readily selected by reference to the general operation conditions set forth above.

The concentration of the hydrogen peroxide added to the aqueous solution can be between 5% and 7Ø% by weight, preferably between 3Ø% and 5Ø% for safety and handling purposes. The method of introduction can be continuous or batch. It can be introduced at or anywhere prior to contact of the waste stream with the catalyst. Hydrogen peroxide may also be added at various points within the catalyst bed provided that at some point both the waste stream and the hydrogen peroxide are simultaneously in contact with the catalyst.

The amount of hydrogen peroxide used in the process depends on the quantity of low-valent sulfur compound to be oxidized. The ratio of hydrogen peroxide to low-valent sulfur compound employed for this process will be the least amount of hydrogen peroxide required to reduce the concentration of the low-valent sulfur compound to the required level. This will be dependent upon other operating parameters, but will preferably not exceed the stoichiometric requirement for the particular low-valent sulfur compound. Higher temperatures may cause more hydrogen peroxide to be used due to hydrogen peroxide decomposition, but less than stoichiometric may also be suitable.

The best mode for practising the process will be clear to one skilled in the art from the following nonlimiting examples.

3

Batch Examples -

A solution of the pollutant of the desired concentration in deionized water was prepared and the pH adjusted to the desired value with NaOH or $H_2SO_4$. The hydrogen peroxide was added, followed by pH readjustment if necessary, and the catalyst was added to the solution to commence the reaction. Aliquots were taken periodically for analysis.

Continuous Examples -

A jacketed glass column was packed with about 20 g of the catalyst, usually $\emptyset.2$ x $\emptyset.6$ cm extruded pellets or 14 x $3\emptyset$ mesh solid. A solution of the pollutant was prepared. The pH was adjusted with NaOH or $H_2SO_4$, and was pumped at a constant rate upwards through the column bed. Temperature was regulated by water circulating through the column jacket. Aliquots from the column effluent were taken for analysis.

Analysis -

Analyses of initial and residual pollutant were carried out using titrimetric, colorimetric or potentiometric procedures. Occasionally analyses were duplicated by two methods to insure accuracy.

Catalyst Preparation -

Mordenite and silicalite were washed with $\emptyset.\emptyset2M$ NaOH to obtain the sodium form. Zeolites 13X and LZY52 were purchased as the sodium form.

Metal ion exchanges were carried out by agitating $5\emptyset$g of the zeolite used as a support in $1\emptyset\emptyset$ml of a $1\emptyset$ to $2\emptyset$ mM solution of metal ion at $5\emptyset\,^{\circ}$C for 15 minutes to 1 hour. The solution was decanted and the solid washed well with water and dried at $11\emptyset\,^{\circ}$C.

## EXAMPLES 1-6

The conditions and results for Examples 1-6 and comparative Examples 1C, 2C, 5C and 6C are presented as Table I. In this series of batch experiments the heterogeneous metal catalysts of the present invention are compared to the same metal catalyst in solu tion. Thiosulfate solutions of $25\emptyset$ mg/L were prepared using $Na_2S_2O_3.5H_2O_2$ and the pH adjusted to 6.4 with $H_2SO_4$. Hydrogen peroxide was added to the solution to yield a hydrogen peroxide concentration of $15\emptyset$ mg/L. This resulted in a $\emptyset.6:1$ hydrogen peroxide/thiosulfate ion weight ratio, corresponding to 2:1 mole ratio. Soluble copper and copper/zeolite X catalysts were also evaluated at pH 9.1. The data in Table 1 show the advantageous effect of the heterogeneous metal catalyst over that of the soluble catalyst except in the nickel case where neither proved to be an effective catalyst for thiosulfate destruction (oxidation).

## EXAMPLES 7-18

Table II summarizes continuous experiments using the heterogeneous metal catalysts with several zeolites (crystalline aluminosilicates) as supports. In these examples thiosulfate solutions of about $2\emptyset\emptyset$ to $25\emptyset$ mg/L, adjusted to pH about 9, were charged with hydrogen peroxide to yield a $\emptyset.6:1$ weight ratio of $H_2O_2:S_2O_3$ ions. This mixture was then pumped through a $2\emptyset$ g bed of the catalyst at 2 ml/min which yielded a contact time between solution and catalyst of 5 minutes. Comparison Example A using a noncatalytic sodium/zeolite Y shows poor thiosulfate destruction. Nearly all other catalysts show at least $7\emptyset\%$ thiosulfate destruction at these short contact times.

## EXAMPLES 19-27

4

The utility of the present invention for sulfide destruction is demonstrated by the batch experiment data in Table III.

Examples B and C are comparative examples in which no catalyst was used. In these examples a sulfide solution was prepared using $Na_2S.9H_2O$. Hydrogen peroxide was added to result in a about 1:1 weight ratio of hydrogen peroxide to sulfide yielding a 1:1 mole ratio of hydrogen peroxide/sulfide. This corresponds to the stoichiometry of the commonly proposed mechanism for sulfide oxidation in acid media. The high sulfide destruction and efficient hydrogen peroxide utilization clearly show the effectiveness of heterogeneous supported metal catalysts for the destruction of this pollutant.

## EXAMPLES 28-29

A further demonstration of sulfide destruction in continuous experiments is found in the results in Table IV. Sulfide solutions of 1:1 hydrogen peroxide/sulfide at pH 7.4 were passed through nickel/zeolite Y and iron/zeolite Y at ambient temperature. At flow rates of 6 mL/min, a two minute contact time, nearly complete sulfide destruction was observed in both the Ni/zeolite Y and Fe/zeolite Y catalyzed reactions. Comparison Example D with Na/zeolite Y shows poorer sulfide destruction and less efficient hydrogen peroxide utilization.

## EXAMPLES 3Ø-33

Samples of the sodium salt of ethyl mercaptan were prepared containing 1Ø7 mg/l of mercaptan sulfur. The samples were oxidized batch-wise by hydrogen peroxide in the presence of copper/zeolite X and nickel/zeolite Y catalysts at a pH of about 4 and about 7.6. All were superior to Example E, a control example, at pH 9.2. Results are presented as Table V.

TABLE I

| COMPARISON OF HOMOGENEOUS AND HETROGENEOUS TRANSITION METALS ON THIOSULFATE DESTRUCTION | | | | | |
|---|---|---|---|---|---|
| Example | Catalyst | Base | % Thiosulfate Destroyed in | | |
| | | | 4 min. | 15 min. | 30 min. |
| 1 | Cu | Zeolite Y | 75 | 96 | 97 |
| 1C | $Cu^{++}$ | - | 75 | 85 | 87 |
| 2 | Cu | Zeolite X | 75 | 97 | 98 |
| 2C | $Cu^{++}$ | - | 70 | 88 | 89 |
| 3 | Cu | $Al_2O_3$ | 75 | 88 | 94 |
| 4 | Cu | $SiO_2$ | 70 | 78 | 96 |
| 5 | Ni | Zeolite Y | 40 | 40 | 50 |
| 5C | $Ni^{++}$ | - | 40 | 60 | 64 |
| 6 | Fe | Zeolite Y | 40 | 90 | 92 |
| 6C | $Fe^{++}$ | - | 60 | 70 | 88 |
| Conditions: | | | | | |
| pH 6.4 except Example 2 was pH 9.1, 20°C-22°C<br>Hydrogen Peroxide:Thiosulfate mol ratio = 2<br>5 g solid catalyst compared with 10 mg/l transition metal ion | | | | | |

TABLE II

| THIOSULFATE DESTRUCTION WITH SUPPORTED METAL CATALYSTS | | | | | | |
|---|---|---|---|---|---|---|
| Example | Catalyst | Thiosulfate In, ppm | $H_2O_2:S_2O_3^{2-}$, wt | pH | Thiosulfate Out, mg/l | % Destroyed |
| 7 | Cu/silicalite | 190 | 0.6 | 9.0 | 57 | 70 |
| 8 | Mn/silicalite | 203 | 0.6 | 8.9 | 42 | 79 |
| 9 | Cu/mordenite | 203 | 0.6 | 8.9 | 60 | 70 |
| 10 | Mn/mordenite | 209 | 0.6 | 8.9 | 71 | 66 |
| 11 | Fe/mordenite | 203 | 0.6 | 8.9 | 26 | 87 |
| 12 | Fe/silicalite | 180 | 0.6 | 8.7 | 62 | 66 |
| 13 | Cu/Zeolite X | 225 | 0.6 | 8.7 | 40 | 82 |
| 14 | Cu/Zeolite Y | 250 | 0.6 | 8.8 | 50 | 80 |
| 15 | Fe/Zeolite Y | 250 | 0.6 | 8.9 | 125 | 50 |
| 16 | Fe/Zeolite Y | 250 | 0.6 | 8.9 | 56 | 78 |
| 17 | Ni/Zeolite X | 250 | 0.6 | 8.9 | 85 | 66 |
| 18 | Ni/Zeolite Y | 250 | 0.6 | 8.9 | 50 | 80 |
| A | Na/Zeolite Y | 225 | 0.6 | 8.8 | 100 | 55 |
| Conditions: | | | | | | |
| temperature = 19°C-21°C<br>reaction time = 5 min @ 2 mL/min flow rate | | | | | | |

## TABLE III

| SULFIDE DESTRUCTION USING SUPPORTED METAL CATALYSTS | | | | | | |
|---|---|---|---|---|---|---|
| Example | Catalyst | Initial Sulfide | $H_2O_2:S^{2-}$, wt | pH | Final Sulfide, ppm | % Destroyed |
| 19 | Cu/Zeolite Y | 174 | 0.9 | 7.7 | <1[a] | 99 |
| 20 | Cu/Zeolite Y | 112 | 1.1 | 3.8 | 3 | 97 |
| 21 | Fe/Zeolite Y | 164 | 1.1 | 4.0 | 10 | 94 |
| 22 | Mn/silicalite | 164 | 1.1 | 7.5 | 2 | 99 |
| 23 | Mn/silicalite | 164 | 0.9 | 3.3 | 22 | 87 |
| 24 | Ni/Zeolite X | 152 | 1.0 | 7.7 | 10 | 93 |
| 25 | Ni/Zeolite X | 180 | 1.1 | 3.3 | 3 | 98 |
| 26 | Ni/Zeolite Y | 145 | 1.0 | 7.7 | 4 | 97 |
| 27 | Ni/Zeolite Y | 180 | 1.1 | 3.2 | 12 | 93 |
| B | None | 112 | 1.1 | 7.5 | 12 | 89 |
| C | None | 104 | 1.0 | 3.8 | 52 | 50 |
| Conditions: | | | | | | |
| temperature = 19°C-21°C<br>reaction time = 15 minutes | | | | | | |

a Example 19 reaction time = 6 minutes

## TABLE IV

| SULFIDE DESTRUCTION - CONTINUOUS FLOW COLUMN | | | | | |
|---|---|---|---|---|---|
| Example | Catalyst | Sulfide In | $H_2O_2$ $S^{2-}$, wt | Sulfide Out (Residual $H_2O_2$) | |
| | | | | 1/2 hour | 1 hour |
| 29 | Ni/Zeolite Y | 180 | 1.1 | 0 (20) | 0 (15) |
| 30 | Fe/Zeolite Y | 150 | 1.0 | 2.5 (50) | 5 (25) |
| D | Na/Zeolite Y | 125 | 1.0 | 25 (2.5) | 25 (0) |
| Conditions: | | | | | |
| pH = 7.4<br>temperature = 19°C-21°C<br>reaction time = 2 min (6 ml/min flow rate) | | | | | |

TABLE V

| MERCAPTAN DESTRUCTION USING $H_2O_2$ AND HETEROGENEOUS CATALYST SYSTEM | | | | |
|---|---|---|---|---|
| Example | Catalyst | pH | Mercaptan Sulfur, mg/l | % Destroyed |
| 30 | Cu/Zeolite X | 4.3 | 27 | 75 |
| 31 | Cu/Zeolite X | 7.6 | 27 | 75 |
| 32 | Ni/Zeolite Y | 4.2 | 13 | 88 |
| 33 | Ni/Zeolite Y | 7.7 | 13 | 88 |
| E | None | 9.2 | 75 | 30 |
| Conditions: | | | | |
| Hydrogen Peroxide = 350 ppm<br>Mercaptan = 107 ppm sulfur as ethyl mercaptan<br>Temperature = 50° C<br>Reaction time = 1 hour except 2 hours for control Example D | | | | |

## Claims

1. A process for oxidizing a low-valent sulfur compound in an aqueous medium characterized by incorporating hydrogen peroxide into the aqueous medium and contacting the medium with a solid catalyst, the catalyst comprising a transition metal selected from the group consisting of vanadium, chromium, molybdenum, tungsten, copper, nickel, manganese, cobalt and iron supported on a metal oxide base having a surface area of at least 10 square meters per gram, said metal oxide being selected from the group consisting of aluminum oxide and silicon oxide and mixtures thereof, preferably an aluminosilicate.

2. The process of claim 1 characterized in that the low-valent sulfur compound is a sulfide and the transition metal is copper, iron or manganese.

3. The process of claim 1 characterized in that the low-valent sulfur compound is a thiosulfate and the transition metal is copper, iron or manganese.

4. The process of claim 1 characterized in that the low-valent sulfur compound is a mercaptan and the transition metal is copper or nickel.

5. The process of claims 1, 2, 3 or 4 wherein the aqueous medium is contacted with the solid catalyst at a temperature of 10° C to 80° C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | US-A-4 743 381 (FMC)<br>* Front-page; abstract; column 1, line 65 - column 2, line 25 * | 1 | C 02 F 1/72<br>B 01 J 23/00 |
| D,A | US-A-4 292 293 (NALCO CHEMICAL)<br>* Column 6, claim 1 * | 1,2 | |
| D,A | US-A-4 569 769 (INTEROX AMERICA)<br>* Column 9, claim 1 * | 1,3 | |
| D,A | US-A-4 443 342 (INTEROX)<br>* Column 1, line 66 - column 2, line 3; column 4, claim 1 * | 1,4 | |

TECHNICAL FIELDS
SEARCHED (Int. Cl.3)

C 02 F

The present search report has been drawn up for all claims

| Place of search | Date of completion of the search | Examiner |
|---|---|---|
| THE HAGUE | 05-06-1989 | TEPLY J. |

EPO FORM 1503 03.82 (P0401)